# EUROPEAN PATENT APPLICATION

(11) **EP 0 541 886 A1**
(43) Date of publication of application: **19.05.1993**
(21) Application number: 92101378.5
(22) Date of filing: 28.01.1992
(51) Int. Cl.: B65G 47/14

(54) **Machine for sorting and prearranging elements in position for use**

(30) Priority: 15.11.1991 IT PD910214
(71) Applicant: Da Ponte, Armando, I-31022 Preganziol (Treviso) (IT); Ferasin, Renato, I-35030 Saccolongo (Padova) (IT)
(72) Inventor: Da Ponte, Armando, I-31022 Preganziol (Treviso) (IT); Ferasin, Renato, I-35030 Saccolongo (Padova) (IT)
(74) Representative: Modiano, Guido, Dr.-Ing.

(57) **Abstract**

Machine for sorting and prearranging elements in position for use, particularly for sorting and arranging hangers (26) to be attached to picture frames and the like, including an element container with a horizontal (13) and inclined bottom (14), and a rotating brush (20) arranged inside the container having bristles which engage and carry the hangers (16) onto pin elements (26) which protrude from a rotating drum (27). Teeth (40) also protrude from the drum below the pins (26) to help engage the hangers (16), and both the pins (26) and teeth (40) are provided with roller bearings (36,46) which engage a cam element (37) upon the rotation of the drum (27) to effectuate respectively a horizontal movement of the pins (26) and a vertical movement of the teeth (40) to arrange them in appropriate positions at different operating stations arranged around the drum (27).

## Description

The present invention relates to a machine for sorting and prearranging elements in position for use.

The machine is particularly but not exclusively suitable for sorting and prearranging for use metallic elements commonly termed "hangers".

Among the countless types of hangers currently commercially available, one of the commonest is the one constituted by an iron wire bent into the shape of a triangle and by a lamina which is folded at the side where the joining point is located.

The lamina thus hangs downward from the triangle and is provided with a pair of holes for nails or staples for fixing for example to the frame of a picture or of a similar object.

Hangers are currently fixed to frames either in a fully manual manner, with the aid of only a pneumatic gun fed with U-shaped staples which are as wide as the center distance between the holes, or in a semi-manual manner, with the aid of machines which feed the frames in the required arrangement to a fixing station where the hangers are put in place manually and stapled by means of a gun.

In the first case, production times are particularly long, also in view of the fact that no reference abutment is provided as regards the point where the hanger must be fixed.

In the second case, working times are shorter but there is still the problem related to the positioning of the hanger at the point where it is to be fixed to the picture.

The aim of the present invention is to provide a machine for sorting and prearranging in position for use elements such as hangers to be fixed to picture frames.

A consequent primary object is to make the operation of fixing a hanger to a picture frame faster, safer and more precise.

Another important object is to reduce the possibility of errors in fixing on the part of the labor used for the operation.

Another important object is to provide a machine which can also be adequately used to sort and prearrange in position for use other types of elements.

Yet another object is to minimize idle times related to the mutual positioning of the hangers and of the frames prior to fixing.

Still another object is to provide a machine which is also suitable for fixing more than one hanger on a frame if said frame has particularly large dimensions.

Not least object is to provide a machine which can be manufactured at low cost with conventional equipment and by means of elements which are easily commercially available.

This aim, these objects and others which will become apparent hereinafter are achieved by a machine characterized in that it comprises means for containing elements in a random distribution, associated with rotating means suitable for removing said elements and for conveying them onto retention means which can move between a region which is adjacent to said rotating means and a region of use.

Advantageously, each of said retention means is suitable for accommodating a plurality of said elements; said retention elements are furthermore associated with means suitable for selecting only one of said elements, discharging the others.

Further characteristics and advantages of the invention will become apparent from the detailed description of an embodiment thereof, illustrated only by way of non-limitative example in the accompanying drawings, wherein:

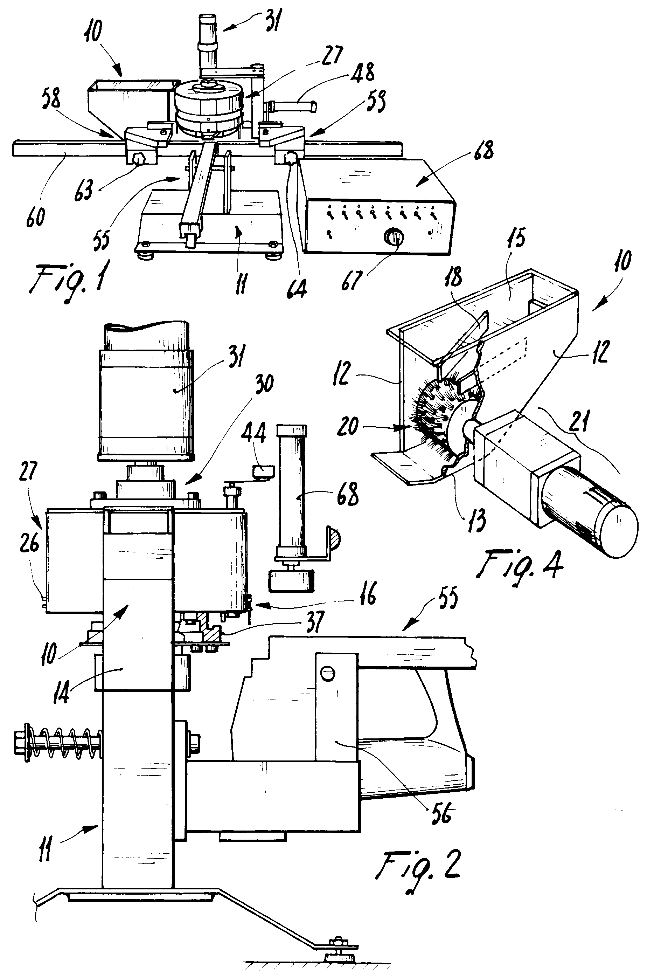

figure 1 is a general perspective view of the machine according to the invention;
figure 2 is a side view of the machine of figure 1;
figure 3 is a top view of the machine of the preceding figures;
figure 4 is a partially cutout perspective detail view related to the elements containment tank;
figure 5 is a sectional view of the tank and of a portion of the rotating drum for retaining the elements;
figure 6 is a sectional view of the rotating drum which is suitable for moving the elements from the tank to the region of use;
figure 7 is a schematic plan view of a selection cam associated with the drum;
figures 8 to 10 are detail profile views of the various steps of selection of the elements;
figure 11 is a front view of the elements used in the machine;
figures 12 and 13 are partially sectional detail views of the steps for prearranging the elements for use.

With reference to the above figures, a machine for sorting and prearranging elements in position for use, in a configuration suitable for prearranging hangers for fixing to picture frames, comprises containment means, constituted by a tank generally designated by the reference numeral 10, which is rigidly associated with a lower support 11 and which comprises two walls 12 which substantially have the shape of an equilateral trapezoid, which are arranged parallel to one another and which have their longer parallel sides directed upwardly.

The tank 10 is closed downwardly by a horizontal bottom 13 and by an inclined bottom 14 at the inclined sides of the walls 12.

An openable cover 15 is arranged above, and the region which corresponds to the vertical sides of the walls 12 is completely open.

The tank 10 is fed with hangers, each of which is generally designated by the reference numeral 16 and is composed of an iron wire 17 which is folded in the shape of a triangle; a rectangular lamina 18, provided with a pair of holes 19, hangs on the side of said triangle where the joint is located.

Rotating means, constituted by a cylindrical brush 20 with a horizontal axis coupled to an external gearmotor 21 which rotates said brush, are arranged in the tank 10.

Said brush 20 is substantially tangent to the inclined bottom 14 and to the open region and its width is equal to the distance between the walls 12.

The rotation of said brush 20 causes the hangers 16 to adhere between the bristles thereof and to be carried from the bottom of the tank 10 to the open region, passing through the region of the cover 15.

The bristles of said brush 20 are dense and have a considerable diameter, so that they do not allow the hangers 16 to penetrate between them but keep them as much as possible in a peripheral region.

Removal of the hangers 16 by means of the brush 20 creates, inside the tank 10, three regions of accumulation: a first one, indicated by 22, is at the bottom and is the largest.

A second accumulation region 23 is formed at the region comprised between the brush 20 and the inclined bottom 14, and acts as buffer region between the first region 22 and a third region 24 which is located between the open region and the cover 15, allowing a constant arrival of hangers 16, since the brush 20, by rotating, moves only the hangers 16 which are in direct contact with the bristles.

The third region 24 is the region of least accumulation.

Between the first region 22 and the second region 23, the hangers 16 which have been engaged are carried upward, since they are forced against the inclined bottom 14, whereas in passing from the second region 23 to the third region 24 the engaged hangers 16 remain on the brush by virtue of their own weight.

In the downward passage between the third region 24 and the first region 22, the hangers 16 instead separate from the bristles and, due to both gravity and centrifugal force, they fall in large amounts with a direction which is close to 75 degrees with respect to the horizontal.

Two laminae 18 are present on the upper part of the tank 10, directly below the cover 15, and are shaped so as to convey the hangers 16 toward the center of the brush 20.

Retention means cooperate with said brush 20 and comprise four pins 26 which are arranged so as to be angularly spaced by 90 degrees with respect to one another radially on a rotating drum 27 having a vertical axis which is arranged to the side of the tank 10.

The rotation of the drum 27 carries each pin 26 at the open region of the tank 10 at a level which is substantially equal to that of the axis of the brush 20.

In this manner, the hangers 16 that fall from the third accumulation region 24 hang themselves on the corresponding pin 26 which is conveniently maintained in position.

Said drum 27, which is supported by the same support 11 as the tank 10, is rigidly associated so as to be able to rotate, by means of bearings 28, with a vertical shaft 29 and is coupled, by means of flanges generally designated by the reference numeral 30, to an upper gearmotor 31.

Upon each actuation, the drum 27 rotates through 90 degrees and the pins 26 are thus placed in succession at the region where the hangers 16 are fed and at three other positions in which operations suitable for prearranging the hangers in position for use are performed thereon.

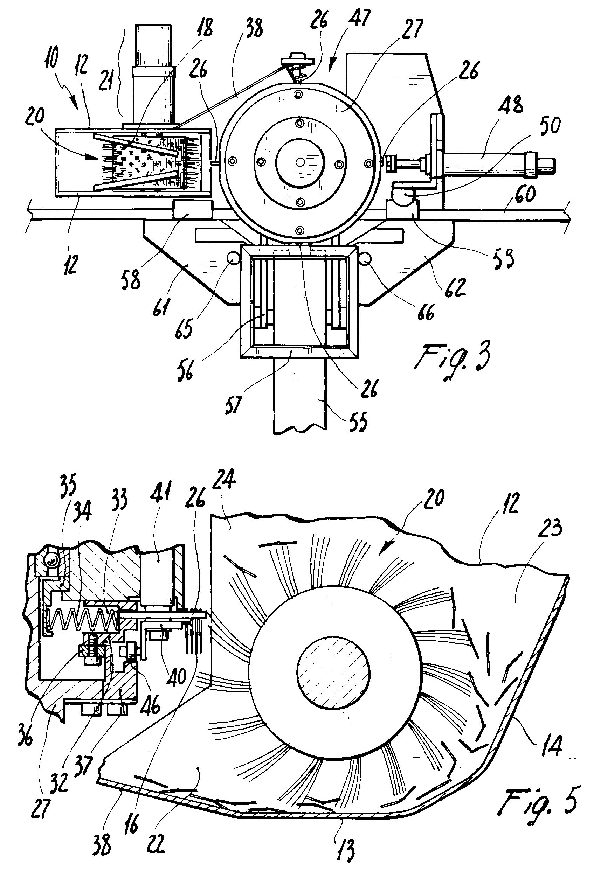

With particular reference to the above mentioned figure 5, each pin 26 is rigidly associated with a cup-shaped support 32, is inserted in a corresponding hole thereof, is retained so as to slide in a corresponding seat 33 defined in the drum 27 and is pushed radially outward by a spring 34 which rests at the rear on an abutment element 35 which is rigidly associated with the structure of said drum 27.

The length of the pin 26 in the engagement position at the tank 10 is such as to allow the engagement of five hangers 16.

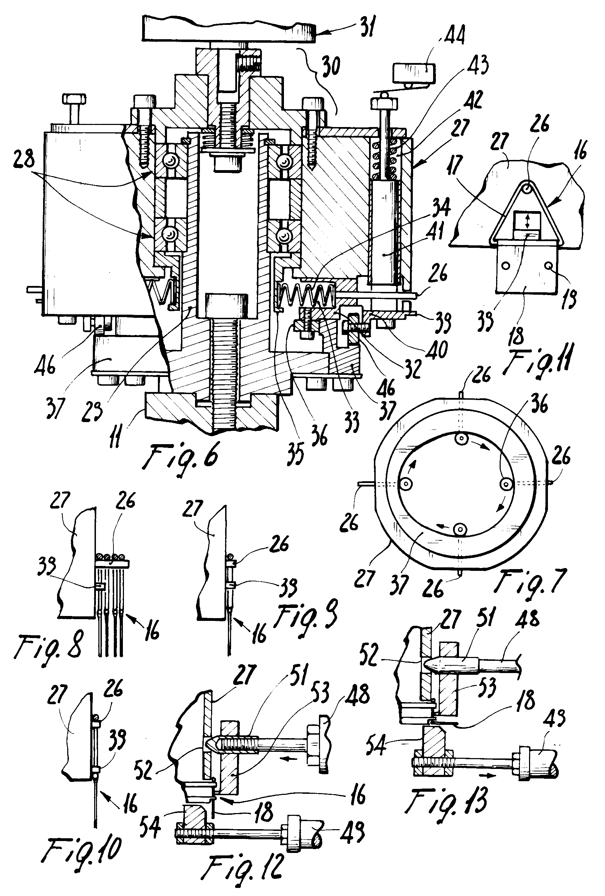

Said cup-shaped support 32 is provided, in a downward position, with a roller bearing 36 having a vertical axis which is pushed by the spring 33 so that it rests externally against the internal wall of an eccentric annular cam 37 which is rigidly associated with the support 11 and which is shaped so as to move said cup-shaped support 32 and cause the pin 26 to retract or extend from the drum 27 during rotation (figure 7).

In this manner, the hangers 16, which are hung by the brush 20 in the feed station, are reduced to a single one during the rotation of the drum 27.

This selection is performed within a 90-degree rotation arc.

Advantageously, the hangers 16 which fall from the pin 26 are collected by an inclined tray 38 which conveys them toward the tank 10.

A corresponding parallelepipedal tooth 39 protrudes from the drum 27 below each pin 26 and extends from a support 40 which is in turn fixed to the lower end of a cylindrical element 41 which is slidingly rigidly associated in a corresponding vertical seat 42 of the drum 27.

Said cylindrical element 41 reduces its diameter in its upper part in order to allow the accommodation of a pusher spring 43, and protrudes through a hole defined on the upper part of the drum 27.

In practice, the cylindrical element 41 is pushed by the spring 43 so as to arrange the tooth 39 at the lower stroke limit which corresponds to resting on the lower side of the wire 17.

If the hanger 16 is not present, the tooth 39 pushed by the spring 43 descends further.

The different position of the cylindrical element 41 connected to the tooth 39 allows to detect the presence or absence of the hanger by means of a microswitch 44 located on the upper part of the drum 27.

Said support 40 is provided, in a region internal to the drum 27, with a roller bearing 46 which has a horizontal axis and rests downward on a corresponding contoured surface of the annular cam 37.

Said contoured surface has such a shape as to raise the support 40, and thus the tooth 39, from the lower stroke limit position.

As already mentioned, upon each actuation, the drum 27 rotates through 90 degrees and each pin 26 is positioned at a station which is suitable for performing an operation on the hanger 16, the first operation being the already described engagement operation.

In a second station, designated by 47, a single hanger 16 is retained on the drum 27 due to the movements of the pin 26 and of the tooth 39 produced by the cam 37.

In passing from the second station to the third station, the tooth 39 lowers and allows to secure the hanger 16.

Two pistons, respectively 48 and 49, are arranged at a third station which is rotated by 90 degrees with respect to the second station and is opposite to the station provided with the tank 10; said pistons are arranged above one another with a horizontal axis and are supported by a support structure 50.

Said pistons 48 and 49 are suitable for rotating the lamina 18 of the hanger 16 from the vertical position which protrudes downwardly from the drum 27 to a horizontal position.

Due to this reason, the stem of the upper piston 48 has a cap 51 which is screwed to the end of said stem and has a conical end which is suitable for entering an adapted alignment hole 52 of the drum 27, and said cap 51 is provided with a stop element 53 which is suitable for abutting against the wire 17 of the hanger 16.

A pusher element 54 is instead screwed on the stem of the lower piston 49; said element 54 is arranged below the drum 27 when idle and causes the rotation of the lamina 18 by moving in the direction indicated in figure 13.

The fourth and last working station, which is rotated by 90 degrees with respect to the third one, is the one in which a pneumatic gun 55 is arranged; said gun is of a per se known and commercially available type, and is suitable for firing U-shaped staples whose width is equal to the center distance between the holes 19 of the hanger 16.

The gun 55, which is radial with respect to the drum 27, is supported by a fork-like coupling 56 which allows it to perform rotations suitable for facilitating the loading of the staples and is fixed by means of a bayonet mechanism which is not visible in the figures.

Said station furthermore includes a vertical piston 68 which is provided with a pad for locking the frame 57 while the staple is fired.

Supports for the frame 57 to which the hanger 16 must be fixed cooperate with said gun 55.

Said supports comprise a pair of sliders, respectively 58 and 59, which can slide on a horizontal guide 60 which is arranged perpendicular to the gun 55.

The sliders 58 and 59 extend toward the gun 55 with planar wings, respectively 61 and 62, for the downward support of the frame 57.

Each slider 58 and 59 is provided with a screw with a knob, respectively 63 and 64, for locking on the guide 60.

The frame 57 rests frontally against the sliders 58 and 59 at a level which is only slightly higher than the level at which the lamina 18 is arranged after its rotation.

For the lateral abutment positions, there are respective vertical cylindrical pins, respectively designated by 65 and 66, on the planar wings 61 and 62; said pins are conveniently retractable and are suitable for being pushed from the top downward in contrast with springs, not visible in the figures, on which they rest downward.

Said pins 65 and 66 act both as lateral abutment for fixing a single hanger to the frame 57 and as abutment for the fixing of two hangers.

In such cases, one proceeds by placing the sliders 58 and 59 so that one of the pins 65 or 66 acts as lateral support and so that the other pin is arranged below the frame and can be pushed downward by overcoming the force of the spring.

Fixing can be performed by first resting the frame 57 so that it has a leftward support, pushing the right pin downward, and then so that it has a rightward support, pushing the left pin downward.

The machine is equipped with a pushbutton control 67 for actuation, with an electric cabinet 68 and with a series of sensors which are not illustrated.

Upon each actuation of the pushbutton control 67, all the stations operate simultaneously for a few seconds, i.e. the brush 20 of the tank 10, the rotation of the lamina 18 and the fixing thereof on the frame 57 by means of the gun 55.

The drum 27 then rotates automatically through 90 degrees and, if a microswitch arranged in the fixing station detects the presence of the hanger 16 in said station, the cycle stops, otherwise the stations and the drum operate in sequence for a certain number of times until the presence of the hanger 16 occurs.

In this manner, the machine is always ready for operation, and the new hanger 16 is loaded in the idle time during which the operator removes the frame and takes hold of another.

From what has been described above, it is thus evident that with the aid of the machine, the role of the operator is to take hold of the frames, arrange them on the supports and press the pedal to actuate the movement of the various parts.

Arrangement of the frames occurs in a precise manner by virtue of the presence of the abutment pins 65 and 66, which are positioned, at the beginning of the operations for fixing the hangers 16, in a manner suitable for a dimensional series of frames.

It should be furthermore noted that the part related to the sorting and selection of the hangers can be conveniently used also to order and prearrange for use other types of elements.

In practice it has thus been observed that the intended aim and objects of the present invention have been achieved.

The invention thus conceived is susceptible to numerous modifications and variations, all of which are within the scope of the inventive concept.

All the details may furthermore be replaced with other technically equivalent elements.

In practice, the materials employed, so long as compatible with the contingent use, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Machine for sorting and prearranging elements in position for use, characterized in that it comprises means (10) for containing elements (16) in a random distribution associated with rotating means (20) suitable for removing said elements and for carrying them onto retention means (26) which can move between a region which is adjacent to said rotating means and a region of use.

2. Machine according to claim 1, characterized in that each of said retention means (26) is suitable for accommodating a plurality of said elements, said retention means being associated with means (32-37) suitable for retaining only one of said elements, discharging the others.

3. Machine according to claim 1, characterized in that said means for containing elements in a random distribution comprise a tank (10) which comprises two walls (12) which are substantially shaped like an equilateral trapezoid, which are arranged parallel to one another and which have their longer parallel sides directed upward, said tank being closed downward by a horizontal bottom (13) and, at the inclined portions of the walls, by an inclined bottom (14), an openable cover (15) being arranged thereabove, the region which corresponds to the vertical sides of said walls being completely open.

4. Machine according to claim 1, characterized in that said rotating means comprise a cylindrical brush (20) with a horizontal axis.

5. Machine according to claims 1 and 4, characterized in that said brush (20) is arranged inside said tank (10) and is coupled to an external gearmotor (21) which actuates its rotation.

6. Machine according to claims 1, 4 and 5, characterized in that said brush (20) is arranged substantially tangent to the inclined bottom (14) of said tank (10) and is equal in width to the distance between said parallel walls (12).

7. Machine according to claims 1 and 4 to 6, characterized in that said brush (20) has dense bristles of considerable diameter in order to keep said removed elements in a region which is as peripheral as possible.

8. Machine according to one or more of the preceding claims, characterized in that two laminae (18) are provided in the upper part of said tank (10) directly below the cover (15) and are shaped so as to convey said elements toward the center of said brush (20).

9. Machine according to claim 1, characterized in that said retention means (26) are supported by a rotating drum (27) with a vertical axis which is arranged to the side of said containment means (10).

10. Machine according to claims 1 and 9, characterized in that said retention means, in a configuration suitable for elements composed of hangers (16) to be fixed to the frames (57) of pictures or the like, comprise a plurality of mutually equidistant pins (26) arranged radially on said drum (27).

11. Machine according to one or more of the preceding claims, characterized in that said pins (26) are stopped, upon the rotation of said drum (27), at said open region of the tank at a level which is substantially equal to the level of the axis of said brush (20), so that said hangers (16) removed by said brush hang onto a pin (26) as they fall.

12. Machine according to claims 1, 8 and 9, characterized in that said drum (27) is rotatably coupled to a vertical shaft (29) by means of bearings (28) and is coupled to a gearmotor (31).

13. Machine according to one or more of the preceding claims, characterized in that upon each actuation, said drum (27) rotates by a fraction of a round angle which is such that each pin (26) is positioned in succession at said tank (10) and at other working stations.

14. Machine according to one or more of the preceding claims, characterized in that each of said pins (26) is rigidly associated with a cup-shaped support (32) which is retained so as to be able to slide in a corresponding seat (33) defined in said drum (27), said cup-shaped support (32) being pushed radially outward by a spring (31) which rests at the rear on an abutment element (35) which is rigidly associated with the structure of the drum (27), the length of said pin (26) which is pushed by said spring (34) making said pin (26) protrude from the drum (27) by such an extent as to allow the engagement of a plurality of hangers (16).

15. Machine according to one or more of the preceding claims, characterized in that said cup-shaped support (32) is provided, in a downward position, with a roller bearing (36) having a vertical axis which rests externally against the internal wall of an eccentric annular cam (37) which is rigidly associated with the support (11) of said machine and is shaped so as to move said cup-shaped support (32) and make said pin (26) retract or protrude from said drum (27).

16. Machine according to one or more of the preceding claims, characterized in that a parallelepipedal tooth (39) protrudes radially from said drum (27) below each of said pins (26), said tooth (39) extending from a support (40) which is in turn fixed to the lower end of a cylindrical element (41) which is slidingly retained in a corresponding vertical seat (42) of said drum (27), said cylindrical element (41) protruding from a through hole of the upper part of said drum (27), said support (40) of said tooth (39) being provided, in a downward position, with a roller bearing (46) having a horizontal axis which rests downward on a corresponding contoured surface of said cam (37), said contoured surface having such a shape as to raise and lower the support (40) upon the rotation of said drum (27).

17. Machine according to one or more of the preceding claims, characterized in that said cam (37) is shaped so that during the rotation of said drum (27) ahead of the region of said tank (10), said pin (26) is extended completely and said tooth (39) is raised, and in that in the immediately subsequent region said tooth (39) is retracted until it keeps a single hanger (16) engaged and then said tooth (39) is lowered in order to secure said hanger (16).

18. Machine according to one or more of the preceding claims, characterized in that two pistons (48,49) with a horizontal axis are arranged in a region opposite to said tank (10), one of said pistons (48) being provided for locking the upper part of the hanger (16) and for centering the portion of the drum (27), the other piston (49) being suitable for rotating the lower lamina-shaped part (18).

19. Machine according to one or more of the preceding claims, characterized in that a pneumatic stapling gun (55), of a per se known kind, is arranged in a station located between said pistons (48,49) and said tank (10), said gun (55) being supported by a fork-like coupling (56) and being fixed by means of a bayonet mechanism.

20. Machine according to one or more of the preceding claims, characterized in that supports for the elements to which said hangers must be fixed cooperate with said gun (55).

21. Machine according to one or more of the preceding claims, characterized in that said supports comprise a pair of sliders (58,59) which can slide on a horizontal guide (60) which is arranged perpendicular to said gun (55), said sliders (58,59) extending toward said gun (55) with planar supporting wings (61,62), each slider (58,59) being provided with a screw with a knob (63,64) for locking on the guide (60).

22. Machine according to one or more of the preceding claims, characterized in that it comprises, for the lateral abutment positions, respective vertical cylindrical pins (65,66) which are conveniently retractable and pushed upward by springs.

23. Machine according to one or more of the preceding claims, characterized in that it comprises an inclined tray (38) which is suitable for conveying into said tank (10) said hangers (16) which have fallen from said pins (26).
